# EUROPEAN PATENT SPECIFICATION

(11) **EP 2 520 932 B1**
(45) Date of publication and mention of the grant of the patent: **30.10.2013**
(21) Application number: 11164942.2
(22) Date of filing: 05.05.2011
(51) Int. Cl.: G01N 33/487

(54) **Test strip for a medical meter**
Teststreifen für ein medizinisches Messgerät
Bandelette de test pour compteur médical

(43) Date of publication of application: 07.11.2012
(73) Proprietor: Sanofi-Aventis Deutschland GmbH, 65929 Frankfurt (DE)
(72) Inventor: Teucher, Axel, 65928 Frankfurt am Main (DE); Jugl, Michael, 65926 Frankfurt am Main (DE)

(56) References cited:
- EP-A1- 2 211 171
- EP-A2- 1 473 563

## Description

### Technical Field

The present invention relates to a test strip for a medical meter capable of analysing a sample of a bodily fluid. More particularly, the invention relates to a test strip for use in combination with a blood glucose meter capable of determining a glucose level of a patient.

### Background of the Invention

Analysing the content of a bodily fluid for diagnosis is of particular interest in the medical field. Medical meters capable of analysing a sample of a body fluid are well-established in the state of the art. The medical meters are designed to determine a concentration of an analyte in the sample. In particular, a concentration of glucose, cholesterol or a hormone may be detected in a sample of interstitial fluid, blood or urine. Usually, the sample of the bodily fluid is applied to a disposable test strip which is then introduced into the medical meter for analysis.

Well-known examples for such medical meters are blood glucose meters capable of determining a glucose level of a patient by means of analysing a blood sample. Such devices are typically used by diabetics to properly dose insulin or an insulin derivate before an injection. The disposable test strip is introduced into a re-usable blood glucose meter. Then the blood sample is applied to the test strip. The blood glucose meter will then analyse the blood sample. Disposable test strips are used for reason of hygiene and to minimize the risk of infections with diseases transmitted by bodily fluids.

Various test strips adapted to be used with different medical meters are known. The medical meters of the state of the art utilize different measurement methods to determine the concentration of the analyte. Thus, test strips are required that are properly adapted to the specific medical meter for optimal accuracy of the measurement results.

For example, an assembly for a body fluid-monitoring system with a test strip is described in the document WO 00/40150. The test strip has a body fluid-collecting and detection section and a body fluid guide for guiding the body fluid into a flow path.

The documents GB 1,086,791 and GB 1,057,997 describe test strips that have barrier zones capable of restricting a capillary migration of a reagent. The barrier zones are impregnated by a hydrophobic material such as a lacquer that is applied to the bibulous carrier material of the test strip.

The document EP 1 473 563 A2 discloses a test strip for use in the detection of an analyte in a liquid sample that includes a base support layer and a reagent pad disposed on the base support layer. The test strip optionally includes a reservoir for restraining excess liquid sample. The reservoir can be defined by hydrophilic and hydrophobic regions of the base support layer or by base support ridges that circumscribe the reagent pad.

The document EP 2 211 171 A1 describes a biosensor for electrochemically measuring a sample, which enables easy control of the timing at which a collected sample is transitioned to the testing site. The biosensor comprises a circuit board made of insulating material, an electrode system, a cover member fixed over the circuit board so as to cover at least a part of the electrode system, a sample flow channel between the cover member and the circuit board to allow communication between the outside and a part of the electrode system, a hydrophilic section on at least a part of the internal surface of the sample flow channel and a hydrophobic section to temporarily stop the flow of th sample into the electrode system.

### Summary of the Invention

It is an object of the present invention to provide an improved test strip for a medical meter capable of analysing the content of a bodily fluid.

The object is achieved by a test strip for a medical meter according to claim 1 and by a medical assembly according to claim 10.

Preferred embodiments of the invention are given in the dependent claims.

A test strip for a medical meter capable of analysing a sample of a bodily fluid comprises a proximal section and a distal section. The distal section is adapted to be inserted into the medical meter. According to the invention, at least one raised barrier ledge capable of restricting a dispersal of the sample on the test strip. The raised barrier ledge separates the distal section from the proximal section.

The raised barrier ledge comprises a simple but efficient means to restrict the dispersal of the sample fluid on the surface of the substantially planar test strip. The barrier ledge is raised from the planar test strip between the distal section that receives the sample of the bodily fluid and the proximal section, which projects from the medical meter when the test strip is inserted thereinto. A user that desires to determine the concentration of an analyte like glucose in the sample applies the sample of the bodily fluid to the proximal section of the test strip. At least part of the sample enters capillaries of the test strip and is transported by capillary action from the proximal section to a test chamber, for example a hollow space within the test strip, or to the distal section of the test strip and into the medical meter. The raised barrier ledge may prevent the excess fluid from flowing from the proximal section to the distal section so that the sample may be analysed under clean and hygienic conditions. In particular, excess fluid may be prevented to enter the medical meter so as to avoid malfunctions and/or inaccurate measurement results caused by corrosion or defilement.

The test strip is particularly suited for used in combination with a blood glucose meter capable of determining the concentration of glucose in a blood sample. The distal end of the test strip is inserted into the blood glucose meter. The raised barrier ledge disposed on one of the surfaces of the test strip provides a visual aid facilitating insertion of the test strip into the blood glucose meter in the proper orientation. Then a blood sample is applied to the proximal section of the test strip for analysis. The raised barrier ledge prevents excessive sample from running towards the distal end of the test strip and into the blood glucose meter. Preventing sample fluid from entering the meter helps avoiding malfunction of the device, for example by preventing corrosion, or by preventing erroneous measurement results caused by leakage currents.

Nowadays, blood glucose meters are readily available that are capable of determining the glucose concentration in a blood sample in just a few seconds. Thus, the barrier ledge needs to restrict the dispersion of the sample just for a relatively short time span. This can be achieved by a raised barrier ledge that is made from the same material as the test strip. The test strip may be made from multiple layers of a bibulous material. The raised barrier ledge may be formed by means of folding the top layer of the test strip. Alternatively, an additional layer may be disposed on or adhered to the surface of the test strip. In another alternative embodiment, a rip is disposed between the layers of the test strip to form the raised barrier ledge.

The barrier ledge extends over a width of the test strip so as to efficiently restrict the dispersal of the sample on the surface of the test strip. The barrier ledge restricts the flow of the sample on the surface of the test strip so as to increase the time span the sample resides on the proximal section of the test strip. This allows the sample to enter capillaries of the proximal section until a pre-determined amount of the sample fluid suitable to be measured by the medical meter enters the capillaries.

According to one embodiment the barrier ledge has a curved shape. The curved shape may redirect any excess sample fluid off the proximal section of the test strip before entering the medical meter. Excess sample fluid flows off the test strip after the test strip is inserted into the medical meter. Thus, malfunctions of the meter device caused by contaminations with bodily fluids may be prevented. Furthermore, measurement errors resulting from an inappropriate sample size may be avoided.

According to an alternative embodiment of the invention, two raised barrier ledges are arranged on opposite sides of the substantially planar test strip. A second or any further barrier may further reduce the risk of excessive sample fluid entering the meter.

Preferably, the distal section of the test strip has a coloured area indicating the end of the test strip with electronic contacts to be inserted into the medical meter. In an example embodiment, a coloured area indicates the sensor area of the medical meter. Different colours may be used for the proximal and distal sections of the test strip. Also, different patterns or symbols, for example an arrow printed on the test strip, may indicate the proximal and / or distal sections of the test strip. An arrow may indicate the direction in which the test strip shall be inserted into the meter.

Preferably, at least a part of the test strip is made from a porous, bibulous and/or hydrophilic material that comprises capillaries capable of receiving a pre-determined amount of the bodily fluid.

Preferably, at least a distal section of the test strip is impregnated with a chemical agent or an enzyme. The chemical agent or the enzyme may react or catalyse a reaction of the bodily fluid according to a method suitable for determining the concentration of the analyte under consideration.

In an example embodiment, the distal section comprises an analyte chamber in which the sample fluid enters. The chemical agent or an enzyme may be dispersed in the analyte chamber of the test strip. Fluid sample may enter the analyte chamber through a capillary. A second capillary or a venting hole may provide an exit for air to be displaced from the chamber by the sample.

Specifically, the chemical agent or enzyme may comprise glucose oxidase so as to catalyze an oxidation of glucose. The glucose concentration may be determined by electrochemical or other suitable measurement methods.

A medical assembly for analysing a sample of a bodily fluid comprises a test strip and a medical meter capable of analysing the sample. The test strip is configured to be introduced into the medical meter for analysis. The test strip comprises at least one raised barrier ledge capable of restricting dispersal of the sample on the test strip. The barrier ledge separates a distal section of the test strip from a proximal section of the test strip. As described herein before, the barrier ledge may prevent that an inappropriate sample size spills into the medical meter. This helps to avoid contaminations resulting in malfunctions of the medical meter. Furthermore, the accuracy of the measurement results may be increased.

The test strip is configured to create an electrical signal corresponding to a concentration of an analyte contained in the sample when the test strip is connected to the medical meter for analysis. The test strip may comprise an electrode and/or a conductive track so as to allow for a electrochemical measurement of the concentration of the analyte.

The proximal section of the test strip may be adapted to receive the sample. The medical meter may be adapted to receive at least the distal section of the test strip for analysis of the sample. The proximal section and the distal section may be connected by at least one capillary so as to allow a pre-determined amount of the sample to flow from the proximal section towards the distal section.

The barrier ledge separating the proximal from the distal section of the test strip is disposed in manner to prevent excess sample fluid from entering the medical meter. The barrier ledge may be disposed so as to substantially close an access opening of the medical meter when the test strip is inserted thereinto.

Preferably, the medical meter is a blood glucose meter capable of determining a concentration of glucose in a blood sample of a patient. The medical meter may be designed as a portable device or as a device for stationary use in a hospital or the like.

Further scope of applicability of the present invention will become apparent from the detailed description given hereinafter.

### Brief Description of the Drawings

The present invention will become more fully understood from the detailed description given herein below and the accompanying drawings which are given by way of illustration only, and thus, are not limitive of the present invention, and wherein:
Figure 1 shows a perspective view of a test strip of the state of the art;
Figure 2 shows a perspective view of a test strip according to a first embodiment of the invention;
Figure 3 shows a perspective view of a test strip according to a second embodiment of the invention;
Figure 4 shows a perspective view of a medical assembly comprising a medical meter with an inserted test strip according to the first embodiment.

Corresponding parts are marked with the same reference symbols in all figures.

### Detailed Description of Preferred Embodiments

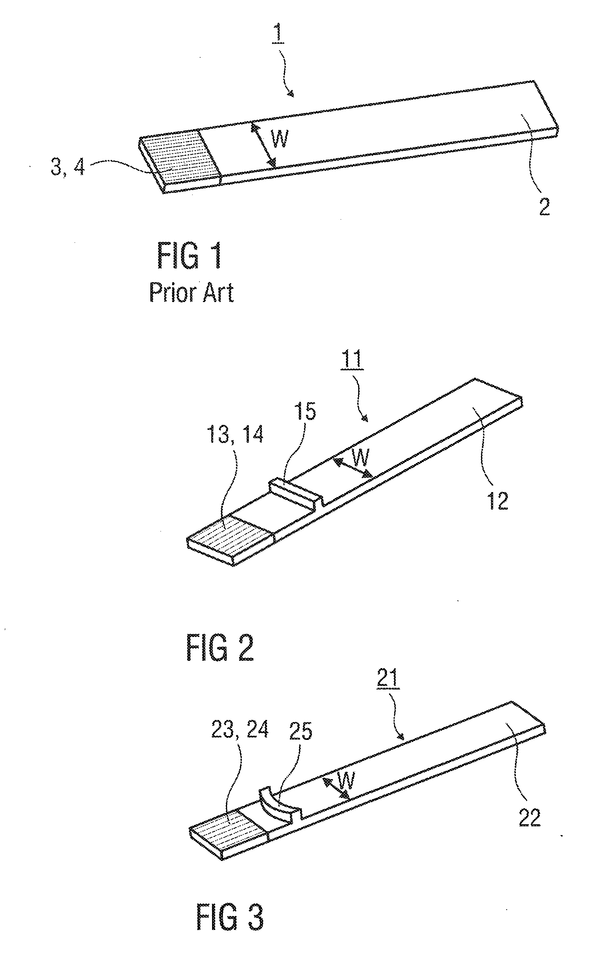

Figure 1 schematically shows a test strip 1 usual in the state of the art. The test strip 1 comprises a proximal section 2 and a distal section 3. The distal section 3 of the test strip 1 is inserted into a medical meter. Then, a sample of a bodily fluid, in particular blood, is applied to the proximal section 2 of the test strip 1. After detecting the bodily fluid, the analysis of the sample is started, for example by electronic signals applied to the sample. The signals may be conducted by conductive tracks extending from the proximal section 2 of the test strip 1 to electrodes in the distal section 3 of the test strip.

The test strip 1 may in particular be designed as a blood glucose test strip for a blood glucose meter. The concentration of glucose may be determined by various measurement techniques. In particular, chemical, electrochemical and/or enzymatic methods may be employed. Even more particularly, coulometric and/or amperometric methods may be used to determine the glucose level in the blood sample.

At least a part of the test strip 1 may be made from a porous or bibulous material and may comprise at least one capillary capable of containing a pre-determined amount of the sample fluid. The distal section 3 of the test strip 1 may provide a test chamber. An enzyme may be deposited in the test chamber during fabrication. The enzyme then reacts with the sample of the bodily fluid when applied thereto. Further, in the case of blood glucose test strips, a redox mediator regenerating the enzyme may be deposited in the test chamber along with the enzyme.

Preferably, the test strip 1 is made from a hydrophilic material.

The distal section 3 of the test strip 1 may have a coloured area 4 indicating the end of a sensor which is inserted into the blood glucose meter. Alternatively or in addition, the test strip 1 may have a coloured area indicating the end of a sensor to which the sample may be applied. The test strip 1 may comprise electrodes so as to allow for an electrochemical measurement of the concentration of the analyte in the sample.

Figure 2 illustrates a test strip 11 for the medical meter according to a first embodiment of the invention. The test strip 11 of the first embodiment may comprise the technical features as described herein before. In particular, the test strip 11 may provide a test chamber comprising a chemical agent like an enzyme. The test strip 11 may be designed to be used when the concentration of glucose in the blood sample of a patient is determined by measurement means known in the state of the art.

Additionally, at least one raised barrier ledge 15 is arranged on one side of the test strip 11 so as to restrict the dispersal of the sample of the bodily fluid when applied to the test strip 11. The barrier ledge 15 is raised from the essentially planar test strip 11 so as to perpendicularly protrude therefrom. The distal section 13 is separated from the proximal section 12 of the test strip 11 by the barrier ledge 15. The barrier ledge 15 extends straight over an entire width W of the test strip 11 so as to prevent the bodily fluid from flowing from the proximal section 12 to the distal section 13 of the test strip 11.

With respect to figure 2, it can be seen that the barrier ledge 15 is arranged on an upper side of the test strip 11. In an example embodiment, the test strip 11 comprises an additional barrier ledge 15 arranged on the opposite side of the test strip 11. This alternative arrangement has the advantage that the test strip 11 has a symmetric design so that the bodily fluid may be applied to either side of the proximal section 12 of the test strip 11.

Figure 3 shows a test strip 21 according to a second embodiment of the invention in a perspective view. The barrier ledge 25 extends over the entire width W of the test strip 21 and has a curved shape.

When a measurement of the concentration of the analyte is desired, the distal section 23 of the test strip 21 is inserted into the medical meter. The sample of the bodily fluid is applied to the proximal section 22 of the test strip 21. The barrier ledge 25 prevents the excess sample fluid from flowing on the surface of the proximal section 22 of the test strip 21 towards the distal section 23 that is typically inserted into the medical meter. Thus, the sample fluid resides onto the proximal section 22 for an increased time span so that the capillary sucks in the pre-determined amount of the sample. The pre-determined amount of the sample moves by capillary action to the distal section 23 and into the medical meter for analysis.

In cases when the amount of sample fluid is initially applied to the proximal section 22 of the test strip 21, an excess amount of sample fluid may be redirected by the barrier ledge 25 so as to flow off the test strip 21 before entering the medical meter. In particular, the curved barrier ledge 25 of the second embodiment is oriented efficiently prevent excess sample fluid from entering the medical meter.

The barrier ledge 25 of the test strip 21 provides a means for hygienically measuring an analyte of the sample of the bodily fluid. In particular, contamination of the medical meter may be avoided when the test strip 21 is inserted thereinto. This enhances the reliability of the device and may avoid malfunctions. Furthermore, a negative influence on the accuracy of the measurement results may be avoided.

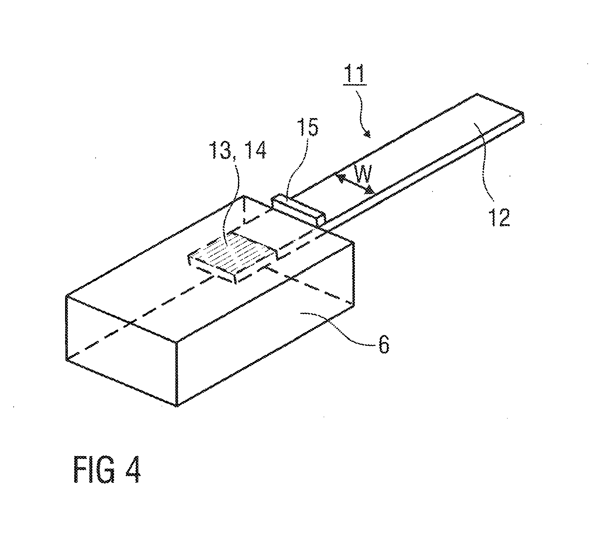

According to the invention, the test strip 11 or 21 is designed to be used in combination with a medical meter 6, especially with a blood glucose meter capable of determining the concentration of glucose in a blood sample applied. Figure 4 shows the medical meter 6 with an inserted test strip 11 according to figure 2. A blood sample is applied on the proximal section 12 of the test strip 11 that projects from the medical meter 6 after the test strip 11 is inserted thereinto. The sample flows into the medical meter 6 by capillary action so that the glucose level may be determined.

The distal end 13 of the test strip 11 is inserted in such a depth into the medical meter 6 that the barrier ledge 15 is located outside the medical meter 6. Especially, the barrier ledge 15 is located directly in front of an opening (not shown) of the medical meter 6 so as to prevent the fluid from flowing at the surface of the test strip 11 from the proximal section 12 into the opening of the medical meter 6.

### List of References

- 1,11,21: test strip
- 2, 12, 22: proximal section
- 3, 13, 23: distal section
- 4, 14, 24: coloured area
- 5, 15, 25: barrier ledge
- 6: medical meter

- W: width

## Claims

1. A test strip (11, 21) adapted for usage in a medical meter (6) capable of analysing a sample of a bodily fluid comprising a proximal section (12, 22) and a distal section (13, 23) adapted to be inserted into the medical meter, where both the proximal section (12, 22) and the distal section (13, 23) cover a full width (W) of the test strip (11, 21) and are arranged on the opposite ends along the length (L) of the test strip (11, 21)
**characterized in that** at least one raised barrier ledge (15, 25) separating the distal section (13, 23) from the proximal section (12, 22) extends over the width (W) of the test strip (11, 21) and is configured to restrict dispersal of the sample on the test strip (11, 21) from the proximal section (12, 22) to the distal section (13, 23).

2. A test strip (21) according to claim 1,
**characterized in that** the barrier ledge (25) has a curved shape.

3. A test strip (11, 21) according to one of the previous claims,
**characterized in that** two raised barrier ledges (15, 25) are arranged on opposite sides of the test strip (11, 21).

4. A test strip (11, 21) according to one of the previous claims,
**characterized in that** the distal section (3) of the test strip (1) has a coloured area (4) indicating the end of the test strip to be inserted into the medical meter.

5. A test strip (11, 21) according to one of the previous claims,
**characterized in that** at least a part of the test strip (1) is made from a porous, bibulous and/or hydrophilic material.

6. A test strip (11, 21) according to one of the previous claims,
**characterized in that** the distal section (13, 23) comprises an analyte chamber configured to receive the sample of the bodily fluid.

7. A test strip (11, 21) according to claim 6,
**characterized in that** a chemical agent or an enzyme is deposited in the analyte chamber.

8. A test strip (11, 21) according to claim 7,
**characterized in that** the chemical agent or enzyme comprises glucose oxidase.

9. A test strip (11, 21) according to one of the previous claims,
**characterized in that** the distal section (13, 23) is connected with the proximal section (12, 22) by at least one capillary so as to allow a pre-determined amount of the sample to move from the proximal section (12, 22) to the distal section (13, 23) by capillary action.

10. A medical assembly for analysing a sample of a bodily fluid comprising a test strip (11, 21) according to any of the previous claims and a medical meter capable of analysing the sample, wherein the test strip (11, 21) is configured to create an electrical signal corresponding to an analyte contained in the sample when it is connected to the medical meter (6) for analysis.

11. A medical assembly according to claim 10,
**characterized in that** the proximal section (12, 22) of the test strip (11, 21) is adapted to receive the sample and the distal section (13, 23) of the test strip (11, 21) is configured to be introduced into the medical meter (6).

12. A medical assembly according to claim 10 or 11,
**characterized in that** the medical meter (6) is a blood glucose meter capable of determining a concentration of glucose in a blood sample.

## Patentansprüche

1. Teststreifen (11, 21), der für die Verwendung in einem medizinischen Messgerät (6), das eine Probe einer Körperflüssigkeit analysieren kann, ausgelegt ist, wobei der Teststreifen einen proximalen Abschnitt (12, 22) umfasst und einen distalen Abschnitt (13, 23), der dafür ausgelegt ist,
in das Messgerät eingeführt zu werden, in dem sowohl der proximale Abschnitt (12, 22) als auch der distale Abschnitt (13, 23) eine vollständige Breite (W) des Teststreifens (11, 21) bedecken und auf den gegenüberliegenden Enden entlang der Länge (L) des Teststreifens (11, 21) angeordnet sind,
**dadurch gekennzeichnet, dass** mindestens eine erhobene Barriereleiste (15, 25), die den distalen Abschnitt (13, 23) von dem proximalen Abschnitt (12, 22) trennt, sich über die Breite (W) des Teststreifens (11, 21) erstreckt und konfiguriert ist, die Ausbreitung der Probe auf dem Teststreifen (11, 21) von dem proximalen Abschnitt (12, 22) zu dem distalen Abschnitt (13, 23) zu beschränken.

2. Teststreifen (21) nach Anspruch 1,
**dadurch gekennzeichnet, dass** die Barriereleiste (25) eine gekrümmte Form aufweist.

3. Teststreifen (11, 21) nach einem der vorhergehenden Ansprüche,
**dadurch gekennzeichnet, dass** zwei erhobene Barriereleisten (15, 25) auf gegenüberliegenden Seiten des Teststreifens (11, 21) angeordnet sind.

4. Teststreifen (11, 21) nach einem der vorhergehenden Ansprüche,
**dadurch gekennzeichnet, dass** der distale Abschnitt (3) des Teststreifens (1) einen farbigen Bereich (4) aufweist, der das Ende des Teststreifens, der in das medizinische Messgerät eingeführt werden soll, anzeigt.

5. Teststreifen (11, 21) nach einem der vorhergehenden Ansprüche,
**dadurch gekennzeichnet, dass** mindestens ein Teil des Teststreifens (1) aus einem porösen, saugfähigen und/oder hydrophilen Material hergestellt ist.

6. Teststreifen (11, 21) nach einem der vorhergehenden Ansprüche,
**dadurch gekennzeichnet, dass** der distale Abschnitt (13, 23) eine Analytkammer umfasst, die konfiguriert ist, die Probe der Körperflüssigkeit aufzunehmen.

7. Teststreifen (11, 21) nach Anspruch 6,
**dadurch gekennzeichnet, dass** ein chemischer Wirkstoff oder ein Enzym in der Analytkammer abgelegt ist.

8. Teststreifen (11, 21) nach Anspruch 7,
**dadurch gekennzeichnet, dass** der chemische Wirkstoff oder das Enzym Glucoseoxidase umfasst.

9. Teststreifen (11, 21) nach einem der vorhergehenden Ansprüche,
**dadurch gekennzeichnet, dass** der distale Abschnitt (13, 23) mit dem proximalen Abschnitt (12, 22) über mindestens eine Kapillare verbunden ist, um so zu ermöglichen, dass eine vorgegebene Menge der Probe sich von dem proximalen Abschnitt (12, 22) durch Kapillarwirkung zu dem distalen Abschnitt (13, 23) bewegen kann.

10. Medizinische Anordnung, um eine Probe einer Körperflüssigkeit zu analysieren, wobei die medizinische Anordnung einen Teststreifen (11, 21) gemäß den vorhergehenden Ansprüchen und ein medizinisches Messgerät, das die Probe analysieren kann, umfasst, wobei der Teststreifen (11, 21) konfiguriert ist, dann, wenn er mit dem Messgerät (6) für die Analyse verbunden ist, ein elektrisches Signal zu erzeugen, das einem Analyt, der in der Probe enthalten ist, entspricht.

11. Medizinische Anordnung nach Anspruch 10,
**dadurch gekennzeichnet, dass** der proximale Abschnitt (12, 22) des Teststreifens (11, 21) dafür ausgelegt ist, die Probe aufzunehmen, und dass der distale Abschnitt (13, 23) des Teststreifens (11, 21) dafür konfiguriert ist, in das Messgerät (6) eingeführt zu werden.

12. Medizinische Anordnung nach Anspruch 10 oder 11,
**dadurch gekennzeichnet, dass** das medizinische Messgerät (6) ein Glucosemessgerät ist, das die Konzentration von Glucose in einer Blutprobe bestimmen kann.

## Revendications

1. Ruban de test (11, 21) adapté pour être utilisé dans un dispositif médical de mesure (6) capable d'analyser un échantillon de fluide corporel,
le ruban comprenant une partie proximale (12, 22) et une partie distale (13, 23) adaptée pour être insérée dans le dispositif médical de mesure,
tant la partie proximale (12, 22) que la partie distale (13, 23) couvrant la totalité de la largeur (W) du ruban de test (11, 21) et étant agencées sur les extrémités opposées de la longueur (L) du ruban de test (11, 21),
**caractérisé en ce que**
au moins une moulure de barrière (15, 25) en saillie séparant la partie distale (13, 23) de la partie proximale (12, 22) s'étend sur la largeur (W) du ruban de test (11, 21) et est configurée pour limiter la dispersion de l'échantillon sur le ruban de test (11, 21) depuis la partie proximale (12, 22) et vers la partie distale (13, 23).

2. Ruban de test (21) selon la revendication 1, **caractérisé en ce que** la moulure de barrière (25) présente une forme incurvée.

3. Ruban de test (11, 21) selon l'une des revendications précédentes, **caractérisé en ce que** deux moulures de barrière (15, 25) en relief sont agencées sur les côtés opposés du ruban de test (11, 21).

4. Ruban de test (11, 21) selon l'une des revendications précédentes, **caractérisé en ce que** la partie distale (3) du ruban de test (1) présente une zone colorée (4) qui indique l'extrémité du ruban de test qui doit être insérée dans le dispositif médical de mesure.

5. Ruban de test (11, 21) selon l'une des revendications précédentes, **caractérisé en ce qu'**au moins une partie du ruban de test (1) est réalisée en un matériau poreux, buvard et/ou hydrophile.

6. Ruban de test (11, 21) selon l'une des revendications précédentes, **caractérisé en ce que** la partie distale (13, 23) comprend une chambre à analyte configurée pour recevoir l'échantillon de fluide corporel.

7. Ruban de test (11, 21) selon la revendication 6, **caractérisé en ce qu'**un agent chimique ou une enzyme sont déposés dans la chambre à analyte.

8. Ruban de test (11, 21) selon la revendication 7, **caractérisé en ce que** l'agent chimique ou l'enzyme comprennent de la glucose oxidase.

9. Ruban de test (11, 21) selon l'une des revendications précédentes, **caractérisé en ce que** la partie distale (13, 23) est raccordée à la partie proximale (12, 22) par au moins un capillaire de manière à permettre à une quantité prédéterminée d'échantillons de se déplacer depuis la partie proximale (12, 22) jusque dans la partie distale (13, 23) par effet capillaire.

10. Ensemble médical destiné à analyser un échantillon de fluide corporel, comprenant un ruban de test (11, 21) selon l'une quelconque des revendications précédentes et un dispositif médical de mesure capable d'analyser l'échantillon, le ruban de test (11, 21) étant configuré pour former un signal électrique en correspondance à l'analyte que contient l'échantillon lorsqu'il est raccordé au dispositif médical de mesure (6) pour analyse.

11. Ensemble médical selon la revendication 10, **caractérisé en ce que** la partie proximale (12, 22) du ruban de test (11, 21) est adaptée pour recevoir l'échantillon et la partie distale (13, 23) du ruban de test (11, 21) est configurée pour être introduite dans le dispositif médical de mesure (6).

12. Ensemble médical selon les revendications 10 ou 11, **caractérisé en ce que** le dispositif médical de mesure (6) est un dispositif de mesure du glucose dans le sang capable de déterminer la concentration du glucose dans un échantillon de sang.
